# EUROPEAN PATENT SPECIFICATION

(11) **EP 2 230 503 B1**
(45) Date of publication and mention of the grant of the patent: **14.08.2013**
(21) Application number: 09155208.3
(22) Date of filing: 16.03.2009
(51) Int. Cl.: G01N 1/02, B01L 3/00

(54) **Sample preparation system, swab unit and base station therefore**
Probenherstellungssystem, Moppeinheit und Basisstation dafür
Système de préparation d'échantillons, unité de prélèvement et station support correspondante

(43) Date of publication of application: 22.09.2010
(73) Proprietor: Dutch Space B.V., 2333 CP Leiden (NL); Bioclear B.V., 9727 DL Groningen (NL)
(72) Inventor: Borst, Augustinus Gerardus, 1063 AD, Amsterdam (NL); Geurkink, Albertus Klaas, 9781 VR, Bedum (NL); Hekman, Johan, 9408 AE, Assen (NL)
(74) Representative: Nederlandsch Octrooibureau

(56) References cited:
- GB-A- 2 432 420
- US-A1- 2002 001 539
- US-A1- 2006 018 800

## Description

The invention is related to a sample preparation system, in particular for biological analysis. Usually, such systems employ a swab element for obtaining samples, in particular surface samples, which are used as forensic evidence, for the detection of biological contamination or detection of surface biomarkers. For example, such surface samples may be obtained at a crime scene for DNA recovery. The samples may originate from fingerprints left at the crime scene as a result of burglary and the like. However, also in the case of other crimes, such as crimes in which persons are wounded or even killed, tissue samples or blood samples can be useful for the purpose of obtaining forensic evidence. Also the sample preparation for the detection of specific organisms that play a role in the human hygiene can be performed with the invention.

At present, the swab elements which have been employed for obtaining a sample are sealed and sent to a laboratory for further analysis. It is of utmost importance that all these swab elements are being treated, so as to be sure that the one or a few thereof which indeed contain the forensic material sought, are detected. However, such procedure entails the careful dispatch and examination of a large amount of swab elements. This makes such procedure rather expensive, which may lead to inefficient use of the available funds.

A sample preparation system according to the preamble of claim 1 is disclosed in GB-A-2432420. The swab unit of this system is carried out as a cartridge that can be connected to an analysis system. Thereby, the process of extracting a sample form a the swab unit and of analyzing said sample can be automated.

The object of the invention is to provide a sample preparation system which allows for a more economic process for taking samples and for the subsequent detection of relevant sample material, said object is achieved by the characterizing features of claim 1.

US2002/0001539 discloses an apparatus and method for the chemilumiscense analysis of microbial contamination. The apparatus comprises a sampling swab and a reaction chamber with frangible seals permitting fluid flow of a reagent solution. By means of a photon detector, bioluminescent radiation from the reaction chamber is monitored indicative of the presence of bacterial cells.

US2006/0018800 discloses a specimen collection device and test system for testing bodily fluids such as saliva. The device consists of a sample pad, a compression tube and a sample chamber. Fluid is removed from the pad by squeezing the compression tube. An indicator is provided for indicating whether an adequate sample has been achieved.

According to the invention, a swab unit is provided by means of which the sample can be taken from for instance a forensic scene. Furthermore, a base station is provided at said scene, by means of which the swab unit can be treated. That is to say, after insertion of the swab unit into the base station, a process is carried out through which it can be determined whether the sample which is taken by said swab unit contains material which is of interest from a forensic point of view. Thus, the swab units can be selected on the basis of the nature of the material which has been sampled by means of this swab unit. As a result, the advantage is obtained that only those swab units have to be conveyed to a laboratory which indeed are of interest. Swab units, which do not contain interesting material, are discarded.

Through this process of pre-examining the swab units and thereby of the samples, a more efficient and economic treatment of e.g. crime scenes can be obtained. A further advantage is that it is now possible to carry out extensive investigations, without however spending the time and cost which would hitherto be necessary and which would prohibit such investigations.

Preferably, the treatment chamber comprises a binding column, e.g. a DNA binding column, for treating the sample substances which originate from the swab element. Such binding column is well-known in the art, and will thus not be described further.

The purpose of the fluid circuit is first of all to convey sample material from the swab element to the treatment chamber. With the aim of providing an efficient process, the fluid circuit may comprise a sample material circuit part extending between the swab element and the treatment chamber and a sample component circuit part extending between the treatment chamber and a collection means for collecting the biological substances obtained by treating the sample, said swab unit and said base station comprising a switch interface for selectively opening the one circuit part and closing the other circuit part vice versa.

To that end, valves may be provided in both circuit parts for opening respectively closing said circuit parts and the switch interface comprises control means for controlling said valves.

The sample material circuit part may comprise a feed port and a discharge port; the base station may comprise a feed line connectable to the feed port and a discharge line connectable to the discharge port, the sample material circuit part extending successively from the feed port past the swab element and the treatment chamber to the discharge port.

The swab element is preferably accomodated within a closeable respectively removable cap, said cap defining a swab chamber which forms part of the sample material circuit part. Before taking a sample, said cap is removed. Subsequently, after the sample has been taken, the cap is fitted again so as to protect the sample. Additionally, the fitted cap allows to direct fluid along the swab element so as to transport the sample material for treatment in the treatment chamber. Besides these functions, the cap ensures that the swab element is well protected against soiling and inadvertent collection of materials.

Additionally, the swab element may comprise a fluid permeable, e.g. a cotton, swab tip and a hollow swab stick, said hollow swab stick defining a swab stick channel which forms part of the sample material circuit part. Fluid is guided through the hollow stick and emanates through the swab tip. Said swab tip carries the material to be investigated. Thus, it is well ensured that said material is reliably taken from the tip and flushed together with the fluid. It is also possible to make the fluid flow through the swab camber first and then back through the swab stick channel.

After the sample material has been transported into the treatment chamber, the fluid in question should be removed. It should be ensured that it is not used again, as it will contain matter which results from a previous swab element. Therefore, it is advantageous in case the base station comprises a fluid dump for receiving fluid discharged from the discharge port. It is of course possible to remove the used fluid in any other way, such as by collecting this in a container which is apart from the base station and the swab unit.

As soon as the sample material has been treated in the treatment chamber, it is to be transported to the location for analysis by the instruments of the base station for detecting biological substances and the like. Therefore, the sample component circuit part extends successively from a feed port through the treatment chamber to the collection means. Once the sample material has been received by the collection means, the analysis may be carried out. Said collection should be accessible by the detection means; preferably, the collection means comprises a translucent vial which is closed by a septum, a needle extending through the septum and being connected to the sample component circuit part and wherein optical detection means are provided which cooperate with the translucent vial.

The interface between the swab unit and the base station may be carried out in several ways so as to enable the flow of liquid between. For instance, mechanical connectors may be provided such as pipe or hose couplings and the like. In an efficient embodiment which allows a quick and safe connection upon introducing the swab unit in the docking station, the ports each comprise a septum and the base station comprises corresponding needles which are inserted into a septum each.

For the purpose of further influencing the detection in a favourable way, the base station may comprise heating means for heating the swab element.

The invention is furthermore related to a swab unit for use in the system as described before, as well as a base station for use in said system.

The invention will now be described further with reference to the embodiment of the sample preparation system as shown in the drawings.
Figure 1 shows the swab unit according to the invention.
Figure 2 shows the sample preparation system according to the invention.

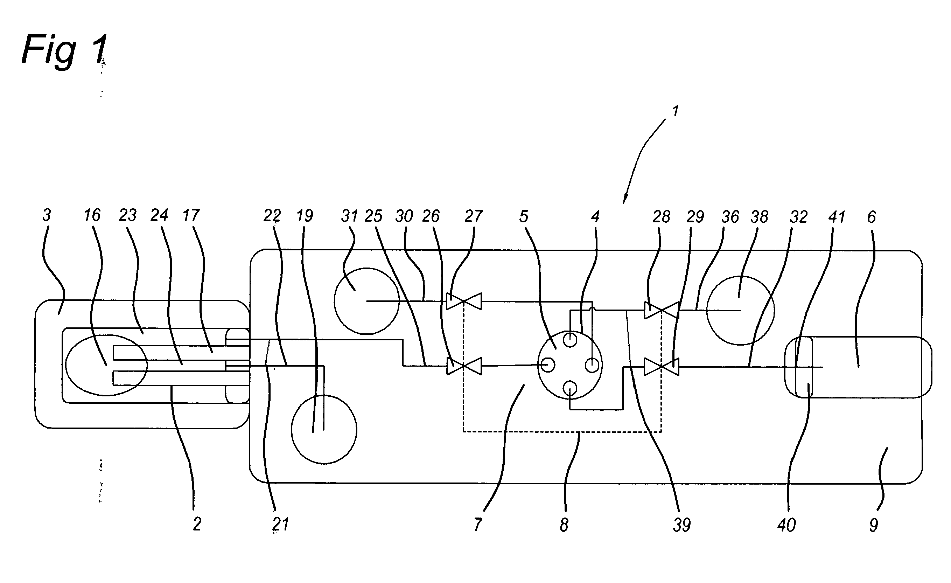

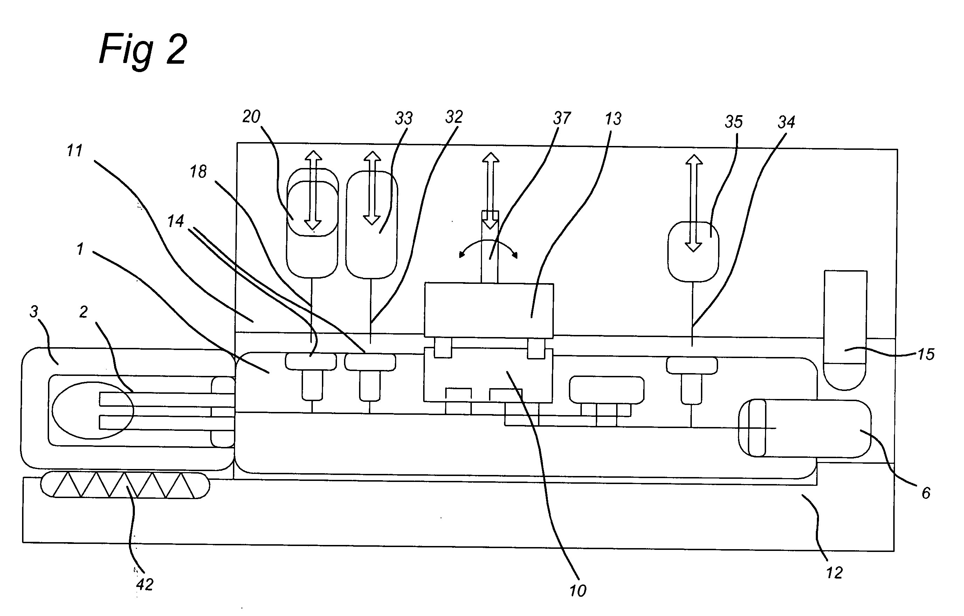

The swab unit 1 which is schematically shown in figure 1 comprises a housing 9 and a swab element 2 mounted at one end of the housing. Furthermore there is a cap 3 which surrounds the swab element 2 and which is connected in a releasable fashion to the housing 1. A column chamber 4 is located within the housing 1, which column chamber houses a DNA binding column 5. A sample fluid vial 6 is also connected to the housing 1. These components are interconnected by the fluid circuit 7 which is switched by the switch system 8. The switch system 8 is controlled by the knob 10, shown in figure 2, which protrudes with respect to the housing 1.

Figure 2 shows, that this swab unit 1 is accomodated in the base station 11. Said base station 11 in fact comprises a docking station 12 within which the swab unit 1 has been docked. In this situation, the base station 11 and the swab unit 1 define a switch interface 13 which comprises the knob 10 of the swab unit and a selector 37 of the base station. Furthermore they define a fluid interface 14 as well as a detection interface 15. These interfaces will be described further below in connection with the swab unit.

Taking a sample by means of the swab unit occurs after removing the cap 3. Subsequently, the tip 16 of the swab element 2 is brought in contact with a sample surface; next, the cap 3 is refitted on the housing 9, thus protecting the sample taken. The swab unit is docked in the docking station 12 of the base station 11. Through the fluid interface 14, in particular the needle 18 thereof, which is pushed through the septum 19 of the swab unit 1, fluid from the reservoir 20 is pumped into the sample material circuit 21. The fluid flows through the line 22 into the hollow swab stick 17 and through the swab tip 16. In this process, swab material which is present on the swab tip is taken with the fluid flow into the channel 23 within the swab chamber 23 The said fluid is heated for a certain time by the heater 42 and flows through the line 25. The valve 26 of the valve system 8 is in the open position, which allows the fluid with sample material to flow into the binding chamber 4. As the valve 27 is open as well and the other valves 28, 29 are closed, superfluous fluid is compelled to flow through line 30 towards septum 31. By means of the needle 32 of the base station which penetrates through the septum 31, said superfluous fluid can be collected in the reservoir 33 in the base station.

In summary, fluid from the reservoir 20 is pumped into the sample material circuit 21. The fluid flows through the line 22 into the hollow swab stick 17 and through the swab tip 16 into the channel 23 within the swab chamber 2 through line 25 and 30 towards septum 31. By means of the needle 32 of the base station through the septum 31 and collected in the reservoir 33.

The sample material which has arrived in the binding chamber is decomposed by the DNA binding column 5. The sample components thus obtained will have to be taken to the sample fluid vial for further examination through the sample component circuit part 39. To that end, the valve system 8 is controlled in such a way that the valves 26 and 27 are closed and the valves 28 and 29 are opened. In that state, fluid is introduced through needle 34 from reservoir 35 in the base station 11 into the line 36. To that end, the needle 34 is introduced into the septum 38. The fluid takes the sample components as obtained through the DNA binding column 5, is taken by the fluid into the line 32 so as to finally arrive in the sample fluid vial 6. Line 32 is connected to a needle 41 which is introduced into the septum 40 which closes off the vial 6. This vial can be transferred to a standard laboratory instrument like for instance a QPCR system.

Optionally, through the optical detector 15 the presence of the swab unit can be detected in the base station. This detector can provide feedback to the base station on the presence of the swab unit, allowing start of the sample preparation process.

In addition to the elements described before, the base station comprises control equipment for controlling the selector 37 and the fluid flow through the fluid circuit 7. Heating means 42 are provided for heating the swab element 2.

## Claims

1. Sample preparation system comprising a swab unit (1) and a base station (11), said swab unit comprising a swab element (2) for taking a sample, a treatment chamber (4) for decomposing the sample into biological substances, such as DNA, a fluid circuit (7) between said swab element and said treatment chamber for transporting a mixture of said fluid and said sample from the swab element into said treatment chamber, **characterised by** said base station (11) comprising docking means (12) for accomodating the swab unit (1), in such a way that with the swab unit accomodated by the docking means of the base station, said base station (11) and said swab unit (1) provide a fluid interface (14) for transferring fluid from the base station into the swab unit as well as a detection interface (15) enabling the detection of said biological substances.

2. System according to claim 1, wherein the treatment chamber (4) comprises a binding column, e.g. a DNA binding column (5), for treating the sample substances which originate from the swab element (1).

3. System according to claim 1 or 2, wherein the fluid circuit (7) comprises a sample material circuit part (21) extending between the swab element (2) and the treatment chamber (4) and a sample component circuit part (39) extending between the treatment chamber (4) and a collection means (6) for collecting the biological substances obtained by treating the sample, said swab unit (1) and said base station (11) comprising a switch interface (13) for selectively opening the one circuit part and closing the other circuit part vice versa.

4. System according to claim 3, wherein valves (26-29) are provided in both circuit parts (21, 39) for opening respectively closing said circuit parts and the switch interface (13) comprises control means for controlling said valves.

5. System according to claim 3 or 4, wherein the sample material circuit part (21) comprises a feed port (19) and a discharge port (31), the base station (11) comprising a feed line (18) connectable to the feed port (19) and a discharge line (32) connectable to the discharge port (31), the sample material circuit part (21) extending successively from the feed port (19) past and/or through the swab element (2) and the treatment chamber (4) to the discharge port (31).

6. System according to claim 5, wherein the swab element (2) is accomodated within a closeable respectively removable cap (3), said cap defining a swab chamber (23) which forms part of the sample material circuit part (21).

7. System according to claim 6, wherein the swab element (2) comprises a fluid permeable, e.g. a cotton, swab tip (16) and a hollow swab stick, said hollow swab stick defining a swab stick channel (24) which forms part of the sample material circuit part (21).

8. System according to claim 6 or 7, wherein the base station (11) comprises a fluid dump (33) for receiving fluid discharged from the discharge port (31) of the swab unit (1).

9. System according to any of claims 3-8, wherein a sample component circuit (39) part extends successively from a feed port (38) through the treatment chamber (4) to the collection means (6).

10. System according to claim 9, wherein the collection means comprises a translucent vial (6) which is closed by a septum (40), a needle (41) extending through the septum (40) and being connected to the sample component circuit part (39) and wherein optical detection means (36) are provided which cooperate with the translucent vial (6).

11. System according to any of claims 6-10, wherein the ports (19, 31, 38) each comprise a septum and the base station comprises corresponding needles (18, 32, 34) which are inserted into a septum each.

12. System according to any of the preceding claims, wherein the base station (11) comprises heating means (42) for heating the swab element (2).

13. System according to any of the preceding claims, wherein the base station (11) comprises detection means (36) for detecting the presence of the swab unit (1).

14. Swab unit (1) for use in the system according to any of the preceding claims, comprising a swab element (2) for taking a sample, a treatment chamber (4) for decomposing the sample into biological substances, such as DNA, a fluid circuit (7) between said swab clement and said treatment chamber for transporting a mixture of said fluid and said sample from the swab element into said treatment chamber, wherein the fluid circuit (7) comprises a sample material circuit part (21) extending between the swab element (2) and the treatment chamber (4) and a sample component circuit part (39) extending between the treatment chamber (4) and a collection means (6) for collecting the biological substances obtained by treating the sample, a knob (10) forming part of a switch interface (13) with a base station (11) for selectively opening the one circuit part and closing the other circuit part vice versa, a part of a fluid interface (14) with the base station for transferring fluid from the base station into the swab unit as well as a part of a detection interface (15) with the base station enabling the detection of said biological substances.

15. Base station (11) for use in the system according to any of claims 1-13, comprising docking means (12) for accommodating a swab unit (1), a selector (37) forming part of a switch interface (13) with the swab unit(1), a part of a fluid interface (14) with the swab unit for transferring fluid from the base station into the swab unit as well as a part of a detection interface (15) with the swab unit enabling the detection of biological substances.

## Patentansprüche

1. Probepräparationssystem, umfassend eine Abstricheinheit (1) und eine Basisstation (11), wobei die Abstricheinheit umfasst: ein Abstrichelement (2) zum Nehmen einer Probe, eine Behandlungskammer (4) zum Zerlegen der Probe in biologische Substanzen, so beispielsweise DNA, eine Fluidschaltung (7) zwischen dem Abstrichelement und der Behandlungskammer zum Transportieren eines Gemisches aus dem Fluid und der Probe von dem Abstrichelement in die Behandlungskammer, **dadurch gekennzeichnet, dass** die Basisstation (11) ein Koppelmittel (12) zur Aufnahme der Abstricheinheit (1) derart umfasst, dass bei der in dem Koppelmittel der Basisstation aufgenommenen Abstricheinheit die Basisstation (11) und die Abstricheinheit (1) eine Fluidschnittstelle (14) zum Übertragen von Fluid von der Basisstation in die Abstricheinheit wie auch eine Erfassungsschnittstelle (15) zur Ermöglichung der Erfassung der biologischen Substanzen bereitstellen.

2. System nach Anspruch 1, wobei die Behandlungskammer (4) eine Bindungssäule, so beispielsweise eine DNA-Bindungssäule (5) zum Behandeln der Probesubstanzen, die aus dem Abstrichelement (1) stammen, umfasst.

3. System nach Anspruch 1 oder 2, wobei die Fluidschaltung (7) einen Probematerialschaltungsteil (21), der sich zwischen dem Abstrichelement (2) und der Behandlungskammer (4) erstreckt, und einen Probekomponentenschaltungsteil (39), der sich zwischen der Behandlungskammer (4) und einem Sammelmittel (6) zum Sammeln der durch Behandeln der Probe erhaltenen biologischen Substanzen erstreckt, umfasst, wobei die Abstricheinheit (1) und die Basisstation (11) eine Schaltungsschnittstelle (13) zum selektiven Öffnen des einen Schaltungsteiles und Schließen des anderen Schaltungsteiles in Umkehrentsprechung umfassen.

4. System nach Anspruch 3, wobei Ventile (26 bis 29) in beiden Schaltungsteilen (21, 39) zum Öffnen beziehungsweise Schließen der Schaltungsteile vorgesehen sind und die Schaltungsschnittstelle (13) Steuermittel zum Steuern der Ventile umfasst.

5. System nach Anspruch 3 oder 4, wobei der Probematerialschaltungsteil (21) eine Zuführöffnung (19) und eine Abgabeöffnung (31) umfasst, wobei die Basisstation (11) eine Zuführleitung (13), die mit der Zuführöffnung (19) verbindbar ist, und eine Abgabeleitung (32), die mit der Abgabeöffnung (31) verbindbar ist, umfasst, wobei sich der Probematerialschaltungsteil (21) sukzessive von der Zuführöffnung (19) vorbei an und/oder durch das Abstrichelement (2) und die Behandlungskammer (4) zu der Abgabeöffnung (31) erstreckt.

6. System nach Anspruch 5, wobei das Abstrichelement (2) innerhalb einer schließbaren beziehungsweise entfernbaren Kappe (3) aufgenommen ist, wobei die Kappe eine Abstrichkammer (23) festlegt, die einen Teil des Probematerialschaltungsteiles (21) bildet.

7. System nach Anspruch 6, wobei das Abstrichelement (2) eine fluiddurchlässige Abstrichspitze (16) beispielsweise aus Baumwolle und einen hohlen Abstrichstab umfasst, wobei der hohle Abstrichstab einen Abstrichstabkanal (24) festlegt, der einen Teil des Probematerialschaltungsteiles (21) bildet.

8. System nach Anspruch 6 oder 7, wobei die Basisstation (11) ein Fluiddepot (33) zum Aufnehmen von Fluid, das von der Abgabeöffnung (31) der Abstricheinheit (1) abgegeben wird, umfasst.

9. System nach einem der Ansprüche 3 bis 8, wobei sich ein Probekomponentenschaltungsteil (39) sukzessive von einer Zuführöffnung (38) durch die Behandlungskammer (4) zu dem Sammelmittel (6) erstreckt.

10. System nach Anspruch 9, wobei das Sammelmittel umfasst: ein transluzentes Behältnis (6), das durch ein Septum (40) geschlossen ist, eine Nadel (41), die sich durch das Septum (40) erstreckt und mit dem Probekomponentenschaltungsteil (39) verbunden ist, und wobei optische Erfassungsmittel (36) vorgesehen sind, die mit dem transluzenten Behältnis (6) zusammenwirken.

11. System nach einem der Ansprüche 6 bis 10, wobei die Öffnungen (19, 31, 38) jeweils ein Septum umfassen, und die Basisstation entsprechende Nadeln (18, 32, 34) umfasst, die jeweils in ein Septum eingeführt sind.

12. System nach einem der vorhergehenden Ansprüche, wobei die Basisstation (11) Erhitzungsmittel (42) zum Erhitzen des Abstrichelementes (2) umfasst.

13. System nach einem der vorhergehenden Ansprüche, wobei die Basisstation (11) Erfassungsmittel (36) zum Erfassen des Vorhandenseins der Abstricheinheit (1) umfasst.

14. Abstricheinheit (1) zur Verwendung in dem System entsprechend einem der vorhergehenden Ansprüche, umfassend ein Abstrichelement (2) zum Nehmen einer Probe, eine Behandlungskammer (4) zum Zerlegen der Probe in biologische Substanzen, so beispielsweise DNA, eine Fluidschaltung (7) zwischen dem Abstrichelement und der Behandlungskammer zum Transportieren eines Gemisches aus dem Fluid und der Probe von dem Abstrichelement in die Behandlungskammer, wobei die Fluidschaltung (7) einen Probematerialschaltungsteil (21), der sich zwischen dem Abstrichelement (2) und der Behandlungskammer (4) erstreckt, und einen Probekomponentenschaltungsteil (39), der sich zwischen der Behandlungskammer (4) und einem Sammelmittel (6) zum Sammeln der durch Behandlung der Probe erhaltenen biologischen Substanzen erstreckt, umfasst, einen Knopf (10) mit Bildung eines Teiles einer Schaltungsschnittstelle (13) mit einer Basisstation (11) zum selektiven Öffnen des einen Schaltungsteiles und Schließen des anderen Schaltungsteiles in Umkehrentsprechung, eines Teiles einer Fluidschnittstelle (14) mit der Basisstation zum Übertragen von Fluid von der Basisstation in die Abstricheinheit wie auch eines Teiles einer Erfassungsschnittstelle (15) mit der Basisstation zur Ermöglichung der Erfassung der biologischen Substanzen.

15. Basisstation (11) zur Verwendung in dem System nach einem der Ansprüche 1 bis 13, umfassend Koppelmittel (12) zur Aufnahme einer Abstricheinheit (1), einen Auswähler (37) mit Bildung eines Teiles einer Schaltungsschnittstelle (13) mit der Abstricheinheit (1), eines Teiles einer Fluidschnittstelle (14) mit der Abstricheinheit zum Übertragen von Fluid von der Basisstation in die Abstricheinheit wie auch eines Teiles einer Erfassungsschnittstelle (15) mit der Abstricheinheit zur Ermöglichung der Erfassung der biologischen Substanzen.

## Revendications

1. Système de préparation d'échantillons comprenant une unité de prélèvement (1) et une station de base (11), ladite unité de prélèvement comprenant un élément de prélèvement (2) destiné à prélever un échantillon, une chambre de traitement (4) destinée à décomposer l'échantillon en substances biologiques, telles que l'ADN, un circuit fluidique (7) entre ledit élément de prélèvement et ladite chambre de traitement pour transporter un mélange dudit fluide et dudit échantillon depuis l'élément de prélèvement dans ladite chambre de traitement, **caractérisé par le fait que** ladite station de base (11) comprend un moyen d'accueil (12) permettant de loger l'unité de prélèvement (1), de telle sorte qu'avec l'unité de prélèvement logée par le moyen d'accueil de la station de base, ladite station de base (11) et ladite unité de prélèvement (1) fournissent une interface fluidique (14) permettant de transférer un fluide de la station de base dans l'unité de prélèvement ainsi qu'une interface de détection (15) permettant la détection desdites substances biologiques.

2. Système selon la revendication 1, dans lequel la chambre de traitement (4) comprend une colonne de liaison, par exemple une colonne de liaison d'ADN (5), pour traiter les échantillons de substances qui proviennent de l'élément de prélèvement (1).

3. Système selon la revendication 1 ou 2, dans lequel le circuit fluidique (7) comprend une partie de circuit de matériau d'échantillon (21) s'étendant entre l'élément de prélèvement (2) et la chambre de traitement (4) et une partie de circuit de constituants d'échantillon (39) s'étendant entre la chambre de traitement (4) et un moyen de collecte (6) permettant de recueillir les substances biologiques obtenues par le traitement de l'échantillon, ladite unité de prélèvement (1) et ladite station de base (11) comprenant une interface de permutation (13) qui permet sélectivement d'ouvrir une partie de circuit et de fermer l'autre partie de circuit, et inversement.

4. Système selon la revendication 3, dans lequel des vannes (26-29) sont prévues dans les deux parties de circuit (21, 39) pour ouvrir ou fermer lesdites parties de circuit respectivement, et l'interface de permutation (13) comprend un moyen de commande permettant de commander lesdites vannes.

5. Système selon la revendication 3 ou 4, dans lequel la partie de circuit d'échantillon (21) comprend un orifice d'alimentation (19) et un orifice d'évacuation (31), la station de base (11) comprenant une conduite d'alimentation (18) pouvant être raccordée à l'orifice d'alimentation (19) et une conduite d'évacuation (32) pouvant être raccordée à l'orifice d'évacuation (31), la partie de circuit de matériau d'échantillon (21) s'étendant successivement depuis l'orifice d'alimentation (19) au-delà de et/ou à travers l'élément de prélèvement (2) et la chambre de traitement (4) vers l'orifice d'évacuation (31).

6. Système selon la revendication 5, dans lequel l'élément de prélèvement (2) est logé dans un couvercle (3) pouvant être fermé ou enlevé, ledit couvercle définissant une chambre de prélèvement (23) qui forme une partie de la partie de circuit de matériel d'échantillon (21).

7. Système selon la revendication 6, dans lequel l'élément de prélèvement (2) comprend un embout de prélèvement (16) perméable aux fluides, par exemple en coton, et un bâtonnet de prélèvement creux, ledit bâtonnet de prélèvement creux définissant un canal de bâtonnet de prélèvement (24) qui constitue un élément de la partie de circuit de matériau d'échantillon (21).

8. Système selon la revendication 6 ou 7, dans lequel la station de base (11) comprend un dépôt de fluide (33) destiné à recevoir le fluide évacué depuis l'orifice d'évacuation (31) de l'unité de prélèvement (1).

9. Système selon l'une quelconque des revendications 3 à 8, dans lequel une partie de circuit de constituants d'échantillon (39) s'étend successivement depuis un orifice d'alimentation (38) à travers la chambre de traitement (4) et vers le moyen de collecte (6).

10. Système selon la revendication 9, dans lequel le moyen de collecte comprend un flacon transparent (6) qui est fermé par un septum (40), une aiguille (41) s'étendant à travers le septum (40) et qui est raccordée à la partie de circuit de constituants d'échantillon (39), et dans lequel des moyens de détection optiques (36) sont prévus qui coopèrent avec le flacon transparent (6).

11. Système selon l'une quelconque des revendications 6 à 10, dans lequel les orifices (19, 31, 38) comprennent chacun un septum et la station de base comprend des aiguilles correspondantes (18, 32, 34) qui sont chacune insérées dans un septum.

12. Système selon l'une quelconque des revendications précédentes, dans lequel la station de base (11) comprend un moyen de chauffage (42) permettant de chauffer l'élément de prélèvement (2).

13. Système selon l'une quelconque des revendications précédentes, dans lequel la station de base (11) comprend des moyens de détection (36) permettant de détecter la présence de l'unité de prélèvement (1).

14. Unité de prélèvement (1) à utiliser dans le système selon l'une quelconque des revendications précédentes, comprenant un élément de prélèvement (2) permettant de prélever un échantillon, une chambre de traitement (4) permettant de décomposer l'échantillon en substances biologiques, tel qu'en ADN, un circuit fluidique (7) entre ledit élément de prélèvement et ladite chambre de traitement pour transporter un mélange dudit fluide et dudit échantillon depuis l'élément de prélèvement dans ladite chambre de traitement, le circuit fluidique (7) comprenant une partie de circuit de matériau d'échantillon (21) s'étendant entre l'élément de prélèvement (2) et la chambre de traitement (4) et une partie de circuit de constituants d'échantillon (39) s'étendant entre la chambre de traitement (4) et un moyen de collecte (6) permettant de recueillir les substances biologiques obtenues par traitement de l'échantillon, un bouton (10) formant une partie d'une interface de permutation (13) avec une station de base (11) et permettant sélectivement d'ouvrir une partie de circuit et de fermer l'autre partie de circuit, et inversement, une partie d'une interface fluidique (14) avec la station de base permettant de transférer un fluide de la station de base dans l'unité de prélèvement, ainsi qu'une partie d'une interface de détection (15) avec la station de base permettant la détection desdites substances biologiques.

15. Station de base (11) à utiliser avec le système selon l'une quelconque des revendications 1 à 13, comprenant un moyen d'accueil (12) permettant de loger une unité de prélèvement (1), un sélecteur (37) formant une partie d'une interface de permutation (13) avec l'unité de prélèvement (1), une partie d'une interface fluidique (14) avec la station de base permettant de transférer un fluide de la station de base dans l'unité de prélèvement, ainsi qu'une partie d'une interface de détection (15) avec la station de base permettant la détection des substances biologiques.
